# EUROPÄISCHE PATENTSCHRIFT

(11) **EP 0 591 705 B1**
(45) Veröffentlichungstag und Bekanntmachung des Hinweises auf die Patenterteilung: **06.11.1996**
(21) Anmeldenummer: 93114635.1
(22) Anmeldetag: 11.09.1993
(51) Int. Cl.: B64C 1/14, B64C 3/24

(54) **Schalenbauteil aus Faserverbundwerkstoff**
Composite shell construction
Construction coque en matériaux composites

(30) Priorität: 09.10.1992 DE 4234038
(43) Veröffentlichungstag der Anmeldung: 13.04.1994
(73) Patentinhaber: Daimler-Benz Aerospace Airbus Gesellschaft mit beschränkter Haftung, 21129 Hamburg (DE)
(72) Erfinder: Grunwald, Gero, D-22761 Hamburg (DE); Hauschildt, Michael, D-21635 Jork (DE)
(74) Vertreter: Hansmann, Dierk, Dipl.-Ing.

(56) Entgegenhaltungen:
- US-A- 2 576 734
- US-A- 4 291 816

## Beschreibung

Die Erfindung bezieht sich auf ein Schalenbauteil aus Faserverbundwerkstoff mit mindestens einer durch einen Deckel verschließbaren Zugangsöffnung für ein Flugzeug.

Zur Montage, Wartung und Reparatur von Struktur und Systemen im Inneren, beispielsweise von Flugzeugtragflügeln, ist es in vielen Fällen erforderlich, daß Zugangsöffnungen in den betreffenden Schalenbauteilen vorgesehen werden. Der entsprechende Zugang ist durch Mannlöcher, Handlöcher oder durch abnehmbare Schalenbereiche herstellbar. Ein Mannloch wird in der Regel in die Flügelunterschale eingeschnitten. Zur Ausbildung von Zugangsöffnungen mit einem Deckel sind grundsätzlich folgende Konstruktionsprinzipien anwendbar.
a. Nicht mittragende Mannlochdeckel
   Diese zeichnen sich durch folgende Vorteile aus:
   - Leichte Montage und Demontage des Deckels,
   - Keine Abstützung des Flügels notwendig,
   - Gute Zugänglichkeit,
   - Keine Bohrungen in der Kräfte tragenden Flügelhaut.

Hierbei ist jedoch von Nachteil, daß diese Lösung die gewichtlich schwerste aller möglichen darstellt. Dies ergibt sich zwangsläufig daraus, daß zusätzlich tragendes Material erforderlich ist, um die auftretenden Kräfte um die Öffnung herumzuleiten.
b. Mittragende Deckel
   Diese zeichnen sich durch folgende Vorteile aus.
   - Gewichtlich leichter als nicht mittragende Deckel, da Normal- und Schubkräfte zum Teil oder ganz von den Deckeln übertragen werden können.
   - Die Deckel sind kein totes Gewicht.
   - Der Kraftfluß ist weniger gestört.

   Hierbei ist jedoch folgendes von Nachteil:
   - Schwierige Montage bzw. Demontage wegen der hohen Anzahl von Verbindungselementen,
   - Schwierigkeiten bei der Kraftübertragung durch Schrauben,
   - im Wurzelbereich eines Flügels sind zwei- und dreireihige Schraubenanordnungen erforderlich.
c. Mittragende Schalensegmente:
   Hierbei sind ein oder mehrere Schalenbereiche (Panels) einschließlich der betreffenden Stringer demontierbar ausgebildet, um so den erforderlichen Zugang zu gewährleisten.

Diese Maßnahme zeichnet sich durch folgende Vorteile aus:
- Es sind gewichtlich günstigste Lösungen realisierbar.
- Der Kraftfluß wird am wenigsten gestört.
- Die betreffenden Panels stellen kein totes Gewicht dar.
- Es ist ein gegenüber allen anderen Lösungen optimaler Zugang erreichbar.

Hierbei ist folgendes von Nachteil:
Infolge der erforderlichen Stringerkopplungen treten große Probleme bei der Montage bzw. Demontage auf. Die Schwächung eines Flügels durch Entfernung eines Panels kann gegebenenfalls eine Abstützung des Flügels während der Arbeiten erforderlich machen. Es ergeben sich Schwierigkeiten an den Querstößen der Panels bezüglich der Kraftübertragung. An derartigen Panels greifen große Normalkräfte an, die zu übertragen sind.

Demgemäß liegt der Erfindung die Aufgabe zugrunde, ein Schalenbauteil aus Faserverbundwerkstoff mit mindestens einer durch einen Deckel verschließbaren Zugangsöffnung für ein Flugzeug derart auszubilden, daß dabei die Vorteile eines mittragenden Panels genutzt werden, wobei jedoch zugleich dessen Nachteile weitgehend vermieden werden.

Diese Aufgabe wird bei einem Schalenbauteil der vorgenannten Art durch die Merkmale des Anspruchs 1 gelöst.

Das unterschiedliche elastische Verhalten der beiden Bereiche wird durch entsprechende Schichtung und Orientierung des Fasermaterials bewirkt, was entsprechend unterschiedliche Elastizitätsmoduln, kurz E-Moduln, zur Folge hat.

So weist der die Zugangsöffnung enthaltende erste Bereich den niedrigeren E-Modul auf und übernimmt dadurch nur einen geringen Anteil der Gesamtlängskräfte, wohingegen der den ersten Bereich umgebende zweite Bereich den höheren E-Modul aufweist und somit einen größeren Anteil der Gesamtlängskräfte übernimmt. Dies bedeutet gegenüber einem bisherigen Schalenbauteil mit homogenem E-Modul, daß sich zwar eine damit übereinstimmende Summe der Längskräfte ergibt, der aber eine bereichsweise unterschiedliche Verteilung der Längskräfte zugrunde liegt.

Dabei ist insbesondere von Vorteil, daß sich deutliche Materialeinsparungen ergeben, die ihrerseits beachtliche Gewichts- und Kostenreduzierungen zur Folge haben.

Vorteilhafte Weiterbildungen der Erfindung sind in den Unteransprüchen angegeben.

Die Erfindung ist anhand der Zeichnung dargestellt und nachfolgend näher erläutert. Es zeigen
- Fig. 1: schematisch einen Tragflügel mit lösbaren Panels,
- Fig. 2: den Teilschnitt II-II nach Fig. 1,
- Fig. 3: die Einzelheit III nach Fig. 2,
- Fig. 4: schematisch einen Tragflügel mit Mannlöchern und
- Fig. 5: die Einzelheit V nach Fig. 4.

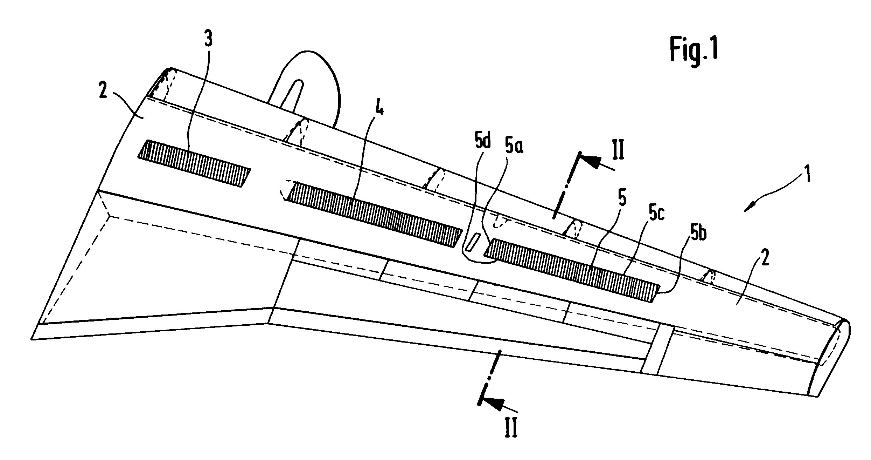

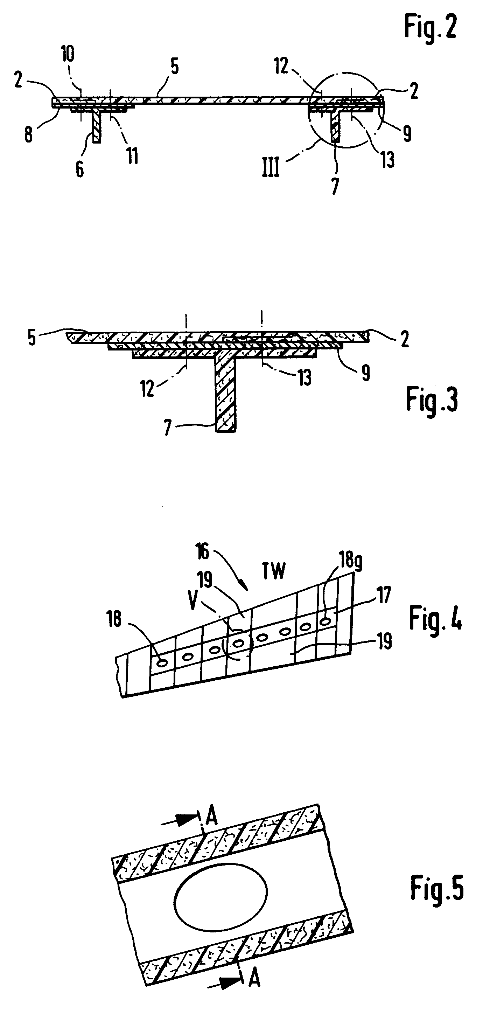

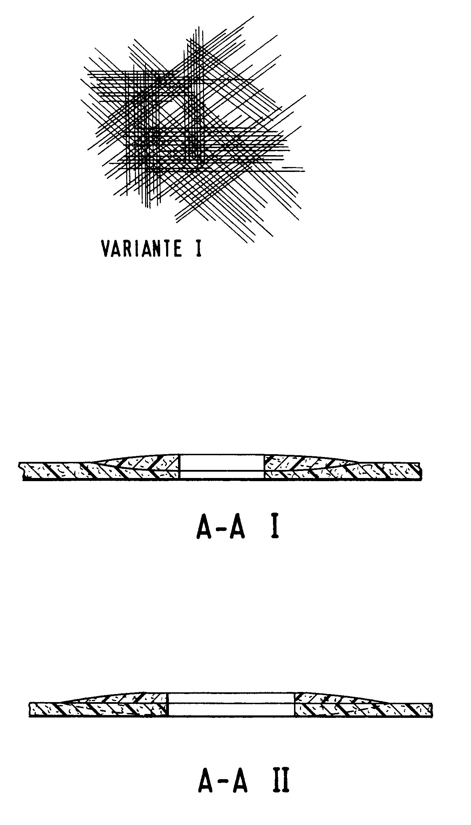

Die Fign. 1 und 2 zeigen einen Tragflügel 1 mit einer Oberschale 2, in der sich drei durch Deckel 3,4 und 5 verschlossene Zugangsöffnungen befinden, wobei vorgesehen ist, daß die Deckel 3,4,5, als mittels Schraubverbindungen montierte lösbare Panels ausgebildet sind. Die Oberschale ist auf ihrer Innenseite durch mehrere in Längsrichtung verlaufende Stringer ausgesteift, wovon hier die Stringer 6 und 7 gezeigt sind. Zwischen den Stringern 6,7 erstreckt sich die durch den Deckel 5 verschlossene Zugangsöffnung. Der Deckel 5 ist im Bereich der Querfugen 5a und 5b sowie der Längsfugen 5c und 5d lösbar mit der Oberschale 2 verbunden. Zwischen den Stringern 6 und 7 und der Oberschale 2 ist jeweils eine in Längsrichtung verlaufende Dopplung 8 bzw. 9 einlaminiert. Damit bilden die Stringer 6,7 die Dopplungen 8,9 und die Oberschale 2 eine monolithisch miteinander zusammenhängende Struktur. Mit dieser Struktur ist der Deckel 5 an den durch strich-punktierte Linien markierten Stellen durch Schraubenreihen 10,11,12 und 13 verbunden.

Fig. 3 zeigt die Einzelheit III nach Fig. 2 im Bereich der Längsfuge 5c mit dem Stringer 7, der Oberschale 2, der Dopplung 9 und dem Deckel 5. Die Oberschale 2 und der Deckel 5 sind von gleicher Wandstärke, wobei diese Wandstärken im gegenseitigen Überlappungsbereich 14 halbiert sind. Der Deckel 5 ist im Bereich der Schraubenreihe 12 mit dem Stringer 7 und der Dopplung 9 verschraubt. Die Schraubenreihe 13 ist im überlappungsbereich angeordnet, wobei die Abstände der Schraubenreihen zur Mittelebene 15 des Stringers 7 annähernd gleich sind. Die Verbindungen des Deckels 5 mit der Oberschale 2 sind entlang der Querfugen 5a und 5b in ähnlicher Weise ausgebildet. Infolge der im Bereich der Längsfugen 5c,5d verlaufenden Dopplungen 8,9 ist die die Zugangsöffnung umgebende Struktur nun so dimensioniert, daß sie im wesentlichen Längskräfte aufnimmt. Hierdurch wird erreicht, daß der Deckel 5 bezüglich der Längskräfte entlastet wird. Der Deckel 5 ist demgegenüber vorwiegend zur Übertragung von Schubkräften ausgelegt, was durch eine Ausrichtung der Fasern im wesentlichen unter ± 45° zur Längsrichtung erreicht wird.

Die vorbeschriebene Gestaltung einer Zugangsöffnung mit einem Deckel von den Ausmaßen eines Panels zeichnet sich durch folgende Eigenschaften aus:
- Das vorwiegend aus ± 45° Lagen bestehende Laminat des Deckels 5 ist bezüglich Stabilität (Beulen) wesentlich unempfindlicher als das Material, das bei einer konventionellen Struktur mit homogenem E-Modul angewendet wird.
- Kraftübertragende Stringerkopplungen zwischen Deckel und Schale, bzw. zwischen zwei Teildeckeln, entfallen. Aussteifungen zur Erhöhung der Beulsteifigkeit des Deckels benötigen keine kraftschlüssige Verbindung zur Schale bzw. Verbindungen untereinander.
- Ein Deckel 5 bzw. ein Panel kann leichter in mehrere Panelsegmente unterteilt werden, da die betreffenden Querstöße infolge der reduzierten Lasten nur noch einen Bruchteil des bisher üblichen Aufwandes verursachen.

Es sind Anwendungsfälle denkbar, in denen es für Wartungsarbeiten nicht erfoderlich ist, große Zugangsöffnungen mit einem lösbaren Deckel von den Ausmaßen eines Panels vorzusehen. Daher besteht eine Ausgestaltung der Erfindung darin, daß ein normalkraftreduziertes Panel mit der umgebenden Struktur durch Niete unlösbar verbunden ist und das Panel kleinere Zugangsöffnungen (Handlöcher oder gegebenenfalls auch Mannlöcher) aufweist, die mit entsprechenden Deckeln durch lösbare Verbindungen verschlossen sind. Da auch in diesem Panel gegenüber der umgebenden Struktur reduzierte Längskräfte wirken, ist hierbei vorteilhaft, daß die Befestigung der betreffenden Handlochdeckel mit relativ geringem Aufwand erfolgen kann.

Die Fign. 4 und 5 zeigen Schematisch einen Flügel 16 mit einem Panel 17, das mehrere Mannlöcher 18 bis 18g aufweist. Das Panel 17 ist monolithischer Bestandteil der betreffenden Flügelschale 19 und ist wieder aufgrund einer ± 45° Anordnung der Fasern als eine normalkraftreduzierte Platte ausgebildet. Anstelle eines Überganges in Form einer Schrauben- oder Nietverbindung zwischen der normalen Flügelschale und dem Panel 17 gehen beide Bereiche organisch ineinander über, so daß es keine scharfe Grenze zwischen beiden Laminaten gibt. Mit der Bezeichnung Panel ist hier eher ein nicht scharf umrissener panelartiger Bereich gemeint. Für den Übergang sind zwei Ausgestaltungen denkbar.
I.) Die 0°-Lagen des normalen Hautlaminates hören in der Nähe des Mannlochrandes ersatzlos auf, so daß im Mannlochbereich des Flügels keine 0°-Lagen existieren. Das Hautlaminat im Bereich der Mannlöcher bildet eine Senke, die nur noch aus ± 45°- bzw. aus wenigen 90°-Lagen besteht. ±
II.) Auch die 0°-Lagen hören, wie in Lösung I, im Randbereich der Mannlöcher auf. Jedoch ist die 0°-Lage unmittelbar an ihrem Ende durch eine +45°- bzw. -45°-Lage ersetzt, so daß keine Senke entsteht. Dies hat innerhalb einer Lagenschicht zur Folge, daß die in unmittelbarer Nähe der Öffnungen befindlichen Fasern gegenüber den anderen Fasern der Lagenschicht eine unterschiedliche Orientierung aufweisen.

Somit ist die Erfindung bei den Zugangsöffnungen 18 bis 18g in der Weise verwirklicht, daß außer den Deckeln 18 bis 18g auch das nicht lösbare Panel 17 als eine vorwiegend auf die Übertragung von Schubkräften dimensionierte Platte ausgebildet ist. Diese Lösung bietet alle bekannten Vorteile üblicher Mannloch-Anordnungen, nämlich
- leichte Montage und Demontage der Deckel,
- keine Abstützung des Flügels nötig,
- gute Zugänglichkeit und
- keine Bohrungen in der Flügelhaut.

Der wesentliche Nachteil üblicher Mannlochanordnungen, nämlich deren hohes Gewicht, wird hierbei vermieden.

## Patentansprüche

1. Schalenbauteil aus Faserverbundwerkstoff mit einer Zugangsöffnung mit einem Deckel in einem aus Faserverbundwerkstoff bestehenden Bauteil eines Flugzeuges,
dadurch **gekennzeichnet**, daß ein erster Längsbereich des Schalenbauteils, der die Zugangsöffnung mit dem Deckel enthält, in Längsrichtung so nachgiebig ausgebildet ist, daß er einen niedrigen endlichen Anteil der Längskräfte aufnimmt und ein zweiter Bereich, der beidseitig entlang des ersten Längsbereiches verläuft, so steif ausgebildet ist, daß er einen größeren Anteil der Längskräfte aufnimmt.

2. Schalenbauteil nach Anspruch 1,
dadurch **gekennzeichnet**, daß der erste Längsbereich (5) als mittels Schraubverbindungen montiertes lösbares Panel ausgebildet ist und selbst die Funktion eines Deckels übernimmt.

3. Schalenbauteil nach Anspruch 1,
dadurch **gekennzeichnet**, daß der erste Längsbereich (5) mittels Nietverbindungen unlösbar montiert ist.

4. Schalenbauteil nach Anspruch 1,
dadurch **gekennzeichnet**, daß der erste Längsbereich (5) als monolithischer Bestandteil des Bauteils ausgebildet ist.

5. Schalenbauteil nach Anspruch 3 oder 4,
dadurch **gekennzeichnet**, daß der erste Längsbereich (5) mindestens eine Zugangsöffnung (18 bis 18g) aufweist.

6. Schalenbauteil nach einem der Ansprüche 1 bis 5,
dadurch **gekennzeichnet**, daß das Fasermaterial des zweiten Längsbereiches im wesentlichen eine 0°-Anordnung aufweist.

7. Schalenbauteil nach einem der Ansprüche 1 bis 6,
dadurch **gekennzeichnet**, daß das Fasermaterial des ersten Längsbereiches (5,17) im wesentlichen eine ± 45°-Anordnung aufweist.

## Claims

1. Shell component of fibre composite material having an access opening with a lid in an aircraft structural component made of fibre composite material,
characterized in that a first longitudinal region of the shell component, which comprises the access opening with the lid, is constructed to yield in the longitudinal direction such that it absorbs a low, finite proportion of the longitudinal forces, and a second region, which runs along both sides of the first longitudinal region, is constructed rigidly such that it absorbs a larger proportion of the longitudinal forces.

2. Shell component according to claim 1,
characterized in that the first longitudinal region (5) is constructed as a detachable panel mounted by means of screw connections and takes over the function of a lid itself

3. Shell component according to claim 1,
characterized in that the first longitudinal region (5) is mounted non-detachably by means of rivet connections.

4. Shell component according to claim 1,
characterized in that the first longitudinal region (5) is constructed as a monolithic constituent of the component.

5. Shell component according to claim 3 or 4,
characterized in that the first longitudinal region (5) has at least one access opening (18 to 18g).

6. Shell component according to one of claims 1 to 5,
characterized in that the fibre material of the second longitudinal region essentially has a 0° arrangement.

7. Shell component according to one of claims 1 to 6,
characterized in that the fibre material of the first longitudinal region (5, 17) essentially has a ± 45° arrangement.

## Revendications

1. Elément de construction en coquille en matériau composite renforcé par des fibres pourvu d'une ouverture d'accès avec un couvercle dans un élément de construction en matériau composite renforcé par des fibres d'un avion,
**caractérisé en ce que,** une première zone longitudinale de l'élément de construction en coquille, qui comprend l'ouverture d'accès pourvue du couvercle, est conçue de manière tellement élastique dans la direction longitudinale qu'elle absorbe une petite partie finale de la force longitudinale et une seconde zone, qui s'étend de part et d'autre le long de la première zone longitudinale, est conçue de façon tellement rigide qu'elle absorbe une plus grande partie de la force longitudinale.

2. Elément de construction en coquille selon la revendication 1, caractérisé en ce que, la première zone longitudinale (5) est conçue comme un panneau monté de façon amovible au moyen d'assemblages par vis et remplit elle-même la fonction d'un couvercle.

3. Elément de construction en coquille selon la revendication 1, caractérisé en ce que, la première zone longitudinale (5) est montée de façon inamovible au moyen d'assemblages rivés.

4. Elément de construction en coquille selon la revendication 1, caractérisé en ce que, la première zone longitudinale (5) est conçue comme une composante monolithique de l'élément de construction.

5. Elément de construction en coquille selon la revendication 3 ou 4, caractérisé en ce que, la première zone longitudinale (5) présente au moins une ouverture d'accès (18 à 18g).

6. Elément de construction en coquille selon la revendication 1 à 5, caractérisé en ce que, le matériau en fibres de la seconde zone longitudinale est principalement disposé à 0°.

7. Elément de construction en coquille selon la revendication 1 à 6, caractérisé en ce que, le matériau en fibres de la première zone longitudinale (5, 17) est principalement disposé à +- 45°.
